# EUROPÄISCHE PATENTANMELDUNG

(11) **EP 1 726 561 A2**
(43) Veröffentlichungstag der Anmeldung: **29.11.2006**
(21) Anmeldenummer: 06016972.9
(22) Anmeldetag: 22.04.2004
(51) Int. Cl.: B66F 9/00, B62B 3/06

(54) **Radsatz für einen Gabelhubwagen**

(30) Priorität: 23.04.2003 DE 10318458; 17.05.2003 DE 20307717 U
(62) Teilanmeldung aus: 04728774.3
(71) Anmelder: Borrmann GmbH, 47574 Goch-Nierswalde (DE)
(72) Erfinder: Borrmann, Hans-Peter, 47574 Goch-Nierswalde (DE)
(74) Vertreter: Viering, Jentschura & Partner

(57) **Zusammenfassung**

Bei einem Radsatz (2, 2a) eines Gabel- oder Tragbalken (26, 27) aufweisenden Gabelhubwagens (1) oder einer Gabelhubwagenausstattung, der lösbar an dem Gabelhubwagen (1) oder der Gabelhubwagenausstattung anbringbar ist und eine Achse (40) mit drehbeweglich daran angeordneten Laufrädern (41, 42, 43) sowie Arretierungsmittel (47, 60; 51, 58; 47a, 60a; 51a, 58a) aufweist soll eine vorteilhafte Lösung für die Ausbildung der Arretierungsmittel geschaffen werden. Dies wird dadurch erreicht, dass die Arretierungsmittel (47, 60; 51, 58; 47a, 60a; 51a, 58a) einen ersten Kupplungsbolzen (47,47a) und einen zweiten Kupplungsbolzen (60, 60a) mit jeweils einer zugeordneten und damit zusammenwirkenden Klinke (50, 50a, 57, 57a) mit Nase (51, 51a, 58, 58a) umfassen, wobei der ersten Kupplungsbolzen (47, 47a) und der zweiten Kupplungsbolzen (60, 60a) einen dem Abstand der Mittelachsen der Gabeln oder Tragbalken (26, 27) eines Gabelhubwagens (1) entsprechenden Abstand aufweisen.

## Beschreibung

Die Erfindung richtet sich auf einen Radsatz eines Gabel- oder Tragbalken aufweisenden Gabelhubwagens oder einer Gabelhubwagenausstattung, der lösbar an dem Gabelhubwagen oder der Gabelhubwagenausstattung anbringbar ist und eine Achse mit drehbeweglich daran angeordneten Laufrädern sowie Arretierungsmittel aufweist.

Gabelhubwagen werden benutzt, um Paletten und auf Paletten gelagerte Waren von einer Person von einem Ort zu einem anderen Ort fahren zu können. Dabei unterfährt der Gabelhubwagen mit seinen Gabeln bzw. Tragbalken die Palette, dann wird der Gabelhubwagen angehoben, wodurch die Palette vom Boden abgehoben wird, so dass der Wagen verfahren werden kann. Da heutzutage üblicherweise die so genannten Euro-Paletten Verwendung finden, sind die Gabelhubwagen in Bezug auf die Gabellängen und deren Abstand zueinander genormt ausgebildet. Dabei weisen die Gabeln bzw. Tragbalken eine solche Länge auf, dass bei in eine Palette eingefahrener Position des Gabelhubwagens die Enden der Gabeln bzw. Tragbalken nicht unter der Palette hervorstehen bzw, aus der Grundfläche der Palette herausstehen. Damit die Gabeln abgesenkt werden können und Paletten unterfahren werden können, sind die Gabelhubwagen zum einen mit einer hydraulischen Hebevorrichtung verbunden und weisen diese zum anderen üblicherweise zumindest unter den Gabeln bzw. Tragbalken relativ kleine Laufräder oder Laufrollen auf. Dies bedingt den Nachteil, dass die Gabelhubwagen auf unebenem oder holprigem Gelände nur schwer bewegt , d. h. verfahren werden können.

Um diesem Problem zu begegnen wird im Stand der Technik vorgeschlagen, einen Gabelhubwagen mit einem zusätzlichen Radsatz auszustatten, der an den Gabelenden bzw. Tragbalkenenden anbringbar ist. So ist ein gattungsgemäßer Gabelhubwagen aus der DE-A1-28 52 835 bekannt. Dieser Gabelhubwagen weist an einer Seite auf einer Achse gelagerte luftbereifte Lenkräder, die mit einer Hub- und Lenkeinrichtung in Wirkverbindung stehen, auf und ist an den demgegenüber gegenüberliegenden Enden der Tragbalken mit einem Ankopplungsmechanismus ausgestattet, der es erlaubt, dort einen ebenfalls luftbereifte Räder aufweisenden Radsatz anzubringen. Eine Weiterentwicklung dazu offenbart die DD-A1-270 697, die im Gegensatz zu dem Gabelhubwagen nach der DE 28 52 835 mit nur noch einer Hubeinrichtung auskommt. Einen Hubtransportwagen mit einem separat anbringbaren Radsatz offenbart auch noch die französische Patentschrift FR 1 550 367.

Bei all den zum Stand der Technik bekannten Gabelhubwagen handelt es sich um Sonderkonstruktionen oder spezielle Anfertigungen, um die Radsätze anbringen zu können. Vor Unterfahren der Palette können die größeren, den Gabelhubwagen "geländegängig" machenden zusätzlichen Räder des Radsatzes nicht montiert werden, da dann ein Unterfahren der Palette mit den Gabeln bzw. Tragbalken des Gabelhubwagens nicht möglich ist.

Aus der DE 28 52 835 A1 ist ein gattungsgemäßer Radsatz bekannt, der eine Achse mit daran drehbeweglich angeordneten Laufrädern aufweist. Weiterhin ist an dem Radsatz ein Gestell angeordnet, das einen Hydraulikzylinder und dadurch betätigbare Hubfüße umfasst. Die Hubfüße werden in die offenen Gabelenden des Gabelhubwagens eingeführt und bilden zusammen mit Nocken, die mit in den Gabelenden angeordneten Halteplatten zusammenwirken, Arretierungsmittel aus, die eine Sicherung gegen Herausrutschen des Radsatzes aus den Gabelenden des Gabelhubwagens ausbilden. Durch Betätigung des Hydraulikzylinders können die Gabelenden über das Gestell bzw. mithilfe des Hubgestells bis in eine Höhe unterhalb der die Laufräder verbindenden Achse angehoben werden. Nachteilig bei der Ausbildung der Arretierungsmittel des bekannten Radsatzes ist es, dass die Füße in den Gabelenden lediglich mithilfe der Verbindung von Nocken und Auflageplatten gesichert sind. Bei einer Relativbewegung der die Hubfüße tragenden Hubstangen zu den Gabelenden, sei es durch eine Auf-/Abbewegung beim Durchfahren von Schlaglöchern oder Wegunebenheiten, sei es durch eine Schwenk- oder Kippbewegung der Hubstangen auf die Gabelenden zu, kann es zu einer Lösung der Verbindung von Nocken und Halteplatten kommen, so dass die Hubfüße aus den Gabelenden herausrutschen können.

Der Erfindung liegt demgegenüber die Aufgabe zugrunde, bei einem Radsatz für einen Gabelhubwagen eine vorteilhafte Lösung für die Ausbildung der Arretierungsmittel zu schaffen.

Bei einem Gabelhubwagen der eingangs bezeichneten Art wird diese Aufgabe erfindungsgemäß dadurch gelöst, dass die Arretierungsmittel einen ersten Kupplungsbolzen und einen zweiten Kupplungsbolzen mit jeweils einer zugeordneten und damit zusammenwirkenden Klinke mit Nase umfassen, wobei der erste Kupplungsbolzen und der zweite Kupplungsbolzen eine dem Abstand der Mittelachsen der Gabeln oder Tragbalken entsprechenden Abstand aufweisen.

Auf diese Weise wird eine vorteilhafte Befestigungsmöglichkeit für den Radsatz durch entsprechende Ausbildung der Arretierungsmittel geschaffen.

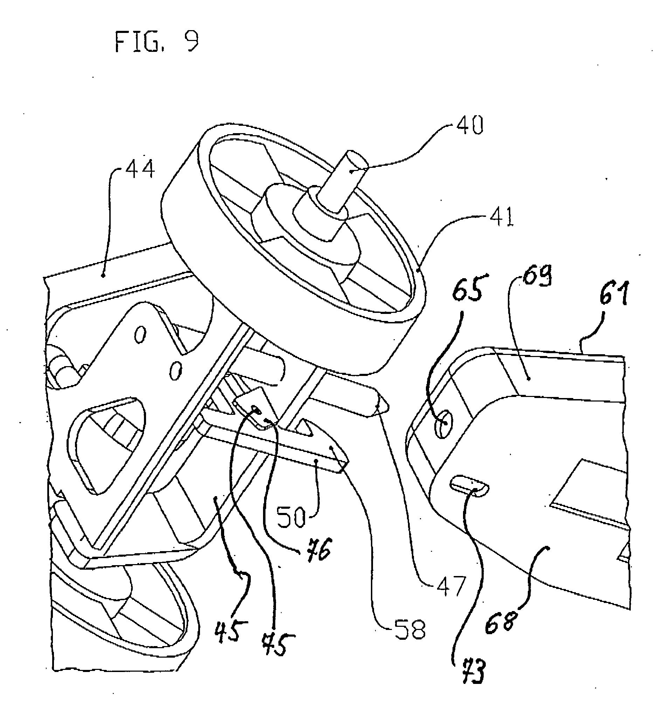

In vorteilhafter Ausgestaltung sieht die Erfindung vor, dass an einer Halteplatte ein rückwärtiger Teil der Klinken federbelastet gelagert ist. Hierdurch wird es möglich, dass die insbesondere darüber hinaus schwenk- oder drehbeweglich gelagerten Klinken federkraftbeaufschlagt in ihre beispielsweise in der Fig. 9 dargestellte Ausgangs- und Arretierungslage (rück-)geführt werden.

Weiterhin zeichnet sich der Radsatz dadurch aus, dass die Klinken Gabelenden mit einem dazwischenliegenden Schlitz aufweisen, in dem ein Entriegelungsbügel gelagert ist.

In besonders vorteilhafter Ausgestaltung der Erfindung ist vorgesehen, dass auf der Achse ein zu der Achse parallel verlaufendes und auf der Achse drehbar angeordnetes Gestell angeordnet ist, welches die Halteplatte und zwei in Längsrichtung der Achse voneinander distanzierte Bügel mit Abstand von der Halteplatte aufweist, wobei erster und zweiter Kupplungsbolzen an der Halteplatte befestigt sind und durch jeden Bügel hindurch ein Kupplungsbolzen hindurchtritt.

Eine zweckmäßige Ausgestaltung der Erfindung besteht weiterhin darin, dass an der Halteplatte Winkelbleche befestigt sind, an denen jeweils über eine Feder die Klinken federbelastet gelagert sind.

Zur Befestigung der Klinken sieht die Erfindung weiterhin vor, dass an den Bügeln Laschen befestigt sind an welchen die Klinken um eine Achse bewegbar angeordnet sind.

Um das Gestell ergreifen und tragen zu können, ist gemäß weiterer Ausgestaltung der Erfindung vorgesehen, dass an der Halteplatte ein Handgriff ausgebildet ist.

Einen besonderen Beitrag zur Stabilität des Gabelhubwagens bei angesetztem Radsatz ergibt sich dadurch, dass in erfindungsgemäßer Weiterbildung auf der Achse des Radsatzes drei Laufräder angeordnet sind.

Schließlich ist es für den Radsatz besonders zweckmäßig, wenn dieser auf einer Achse drehbeweglich angeordnete Laufräder mit einem dem Durchmesser der Lenkräder des Gabelhubwagens entsprechenden Durchmesser aufweist. Dies bringt eine besondere Stabilität des mit dem Radsatz versehenen Gabelhubwagens mit sich, insbesondere ist die Ladefläche dann waagerecht ausgebildet. Insbesondere auf diese Weise gelangt man dann zu einem Gabelhubwagen, der ohne Weiteres auch auf gepflasterten Flächen und unebenen Böden verfahrbar ist. Die Laufräder weisen einen solchen Durchmesser auf, dass Bodenunebenheiten oder auch auf dem Boden vor den Laufrädern liegende kleinere Steine nicht stören. Die Erfindung sieht daher vor, dass der Radsatz auf der Achse drehbeweglich angeordnete Laufräder mit einem dem Durchmesser von Lenkrädern eines Gabelhubwagens entsprechenden Durchmesser aufweist.

Ein Gabelhubwagen lässt sich mit einem erfindungsgemäßen, zusätzlichen Radsatz mit entsprechend großem Raddurchmesser beispielsweise dadurch "geländegängig" machen, dass Übergreifschienen über die Gabel bzw. Tragbalken des Gabelhubwagens übergeschoben und daran stirnseitig der Radsatz befestigt wird.

Hierbei verlängern die Übergreifschienen die Tragbalken, so dass deren Enden bei dann unter eine Palette gefahrenem Gabelhubwagen aus der Palettenfläche hervorstehen. In dieser Position lässt sich dann problemlos an den unter der Palettenfläche hervorstehenden Enden der Übergreifschienen stirnseitig der zusätzliche Radsatz anbringen. Diese Gabelhubwagenausstattung hat darüber hinaus den Vorteil, dass mit ihr übliche, standardmäßige Gabelhubwagen auch nachgerüstet werden können. Eine besonders gute und zweckmäßige Fixierung und Arretierung des Radsatzes an den Übergreifschienen lässt sich dadurch erreichen, dass die Übergreifschienen stirnseitige Öffnungen und unterseitige Öffnungen oder Anschlagsflächen aufweisen, die mit den Arretierungsmitteln des Radsatzes lösbar in Verbindung bringbar sind. Zweckmäßigerweise weisen die Übergreifschienen an ihren vorderen Enden jeweils eine mit einem Kupplungsbolzen des Radsatzes in Eingriff bringbare Kupplungsbohrung und weiterhin vorne an ihrer Ünterseite jeweils eine mit einer Klinkennase des Radsatzes in Eingriff bringbare Eingriffsöffnung auf. Es ist aber auch möglich, dass die Übergreifschienen vorne an der Unterseite jeweils eine mit einer Klinkennase des Radsatzes in Anschlag bringbare Anschlagsfläche aufweisen.

Die Erfindung ist nachstehend anhand der Zeichnung beispielhaft näher erläutert. Diese zeigt in
- Fig. 1: einen bekannten Gabelhubwagen in Seitenansicht,
- Fig. 2: einen Gabelhubwagen in Seitenansicht mit aufgeschobenen Übergreifschienen in seiner Palettenunterfahrposition,
- Fig. 3: einen Gabelhubwagen in Seitenansicht mit aufgeschobenen Übergreifschienen und angebrachtem Radsatz in seiner Palettentransportposition,
- Fig. 4.: den Gabelhubwagen gemäß Fig. 1 in vergrößerter Darstellung,
- Fig. 5: einen erfindungsgemäßen Radsatz in perspektivischer Darstellung,
- Fig. 6: den Radsatz nach Fig. 5 mit Übergreifschienen in perspektivischer Darstellung,
- Fig. 7: den Radsatz nach Fig. 5 in an die Übergreifschienen angekuppelter Position in perspektivischer Darstellung,
- Fig. 8: den Radsatz nach Fig. 5 in an die Übergreifschienen angekuppelter Stellung in perspektivischer Darstellung,
- Fig. 9: eine vergrößerte Detailansicht des linken Teiles der Fig. 5 in perspektivischer Aufsicht von unten,
- Fig. 10: eine Detailansicht des linken Teils der Fig. 6 in perspektivischer Darstellung von unten,
- Fig. 11: eine Darstellung einer alternativen Ausführungsform einer Gabelhubwagenausstattung in perspektivischer Darstellung von unten und in
- Fig. 12: die Befestigungsanordnung der Ausführungsform nach Fig. 11 im rückwärtigen Bereich eines Gabelhubwagengestells.

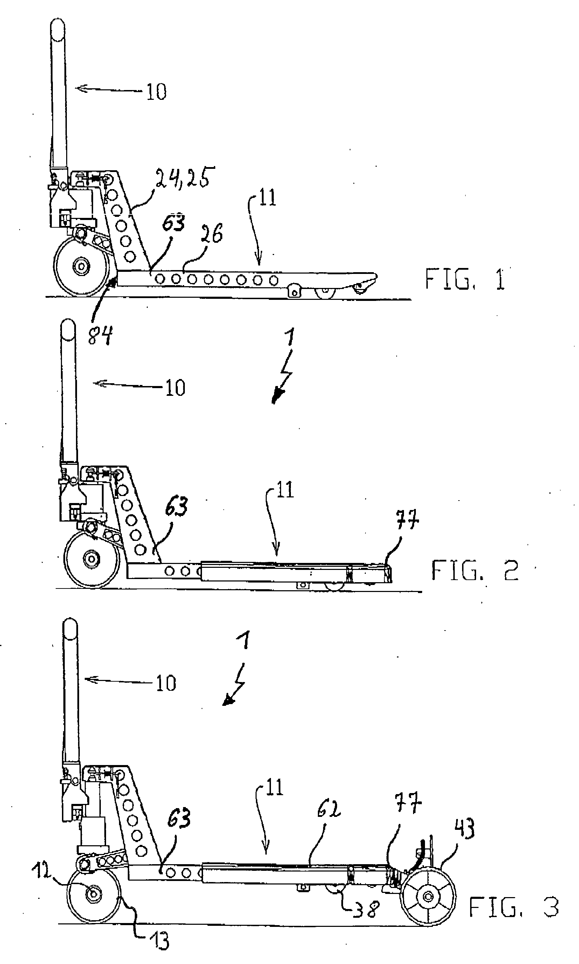

Der insgesamt mit 1 bezeichnete und in den Figuren 2 und 3 dargestellte Gabelhubwagen weist, wie dies insbesondere aus den Figuren 1 bis 4 ersichtlich ist, ein rückwärtiges Teil 10 und ein vorderes Teil 11 auf. Das rückwärtige Teil 10 ist mit dem vorderen Teil 11 gelenkig und drehbeweglich verbunden. Auf einer Achse 12 sind an deren beiden Enden Lenkräder 13, 14 vorgesehen, zwischen denen auf einer sich auf der Achse 12 abstützenden Stütze 15 auf einer Konsole 16 ein Pumpengehäuse 17 vorgesehen ist. In dem Pumpengehäuse 17 ist eine Kolbenstange 18 höhenvewschieblich bewegbar gelagert. An der Konsole 16 ist mittels eines Schwenkgelenkes 19 eine Lenk- und Hubstange 20 mit einem Griff 21 in der Mittellängsebene schwenkbeweglich gelagert und auf einer Rückstellfeder 22 abgestützt. Auf dem kugelförmig ausgebildeten Kolbenstangenkopf der Kolbenstange 18 ist der obere Teil 23 des rückwärtigen Teiles des Gabelträgergestells 63 gelagert. An dem oberen Teil 23 sind zwei nach unten gerichtete Schrägbalken 24, 25 angeordnet, die mit einem Querbalken und zwei Tragbalken 26, 27 starr verbunden sind. An den beiden Schrägbalken 24, 25 ist in zwei Gelenken 28, 29 je ein Kniehebel 30, 31 gelenkig gelagert. Der Kniehebel ist über eine Hebelstange 32 in einem Gelenk 33 an der Stütze 15 gelenkig gelagert. Der Hebelarm 34 ist über ein Gelenk 35 mit einer Fahrstange 36 verbunden, die über ein Hebelgelenk 37 mit einer Laufrolle 38 verbunden ist. Die Schrägbalken 24, 25 bilden zusammen mit dem oberen Teil 23 des rückwärtigen Teiles des Gabelträgergestells 63 und dem Querbalken ein Haltegestell 39. Die Lenk- und Hubstange 20 bildet zusammen mit der das Pumpengehäuse 17 und die Kolbenstange 18 aufweisenden Hubpumpe und den drehbar an der Konsole 16 gelagerten Lenkrädern 13, 14 die Hub- und Lenkeinrichtung des Gabelhubwagens 1 aus.

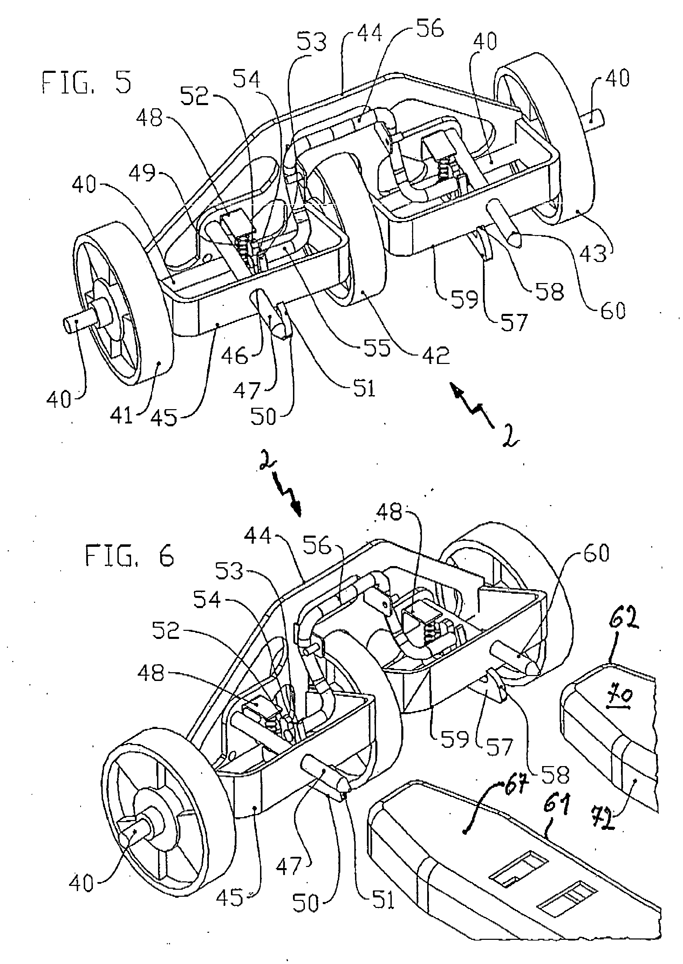

Der in Fig. 5 dargestellte, insgesamt mit dem Bezugszeichen 2 bezeichnete Radsatz weist auf einer Achse 40 drei Laufräder 41, 42, 43 auf. Auf der Achse 40 ist drehbar eine Halteplatte 44 angeordnet. An der Halteplatte 44 ist zwischen den Laufrädern 41 und 42 ein von der Achse abstehender Bügel 45 vorgesehen, der eine Bohrung 46 aufweist, durch die ein Kupplungsbolzen 47 tritt, der an der Halteplatte 44 befestigt ist. An der Halteplatte 44 ist ein Winkelblech 48 befestigt, an dem über eine Feder 49 eine Klinke 50 mit einer Nase 51 federbelastet schwenkbeweglich gelagert ist. Die Klinke 50 weist eine Gabel mit zwei Gabelenden 52 und 53 mit einem dazwischen liegenden Schlitz 54 auf. Zwischen den beiden Gabelenden 52, 53 ist in dem Schlitz 54 ein Entriegelungsbügel 55 gelagert, der zu einem Handgriff 56 nach außen gebogen ist.

Zwischen den beiden Laufrädern 42 und 43 sind die Verhältnisse ebenso wie in dem Bereich zwischen den Laufrädern 41 und 42, allerdings ist die Klinke 57 mit der Nase 58 deutlicher erkennbar als die Darstellung zwischen den Laufrädern 41 und 42. Die Klinke 57 liegt gegen den Bügel 59 an, durch den ein zweiter Kupplungsbolzen 60 hindurchtritt. Die aus den Figuren 5 und 6 ersichtliche Position der Klinken 50 und 57 stellt die Ruhe- bzw. Ausgangsposition und auch die Verriegelungsposition, in welcher die Nasen 51 und 58 in die Öffnungen 73 und 74 der Übergreifschienen 61 und 62 eingreifen, dar. In diese Positionen werden die Klinken 50 und 57 mit Hilfe von Federn 49 selbsttätig bewegt.

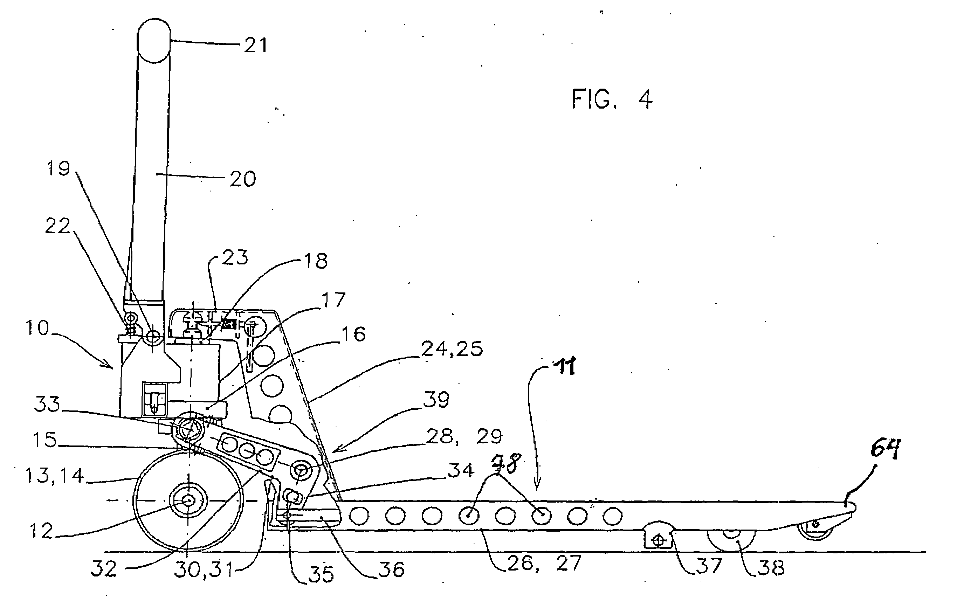

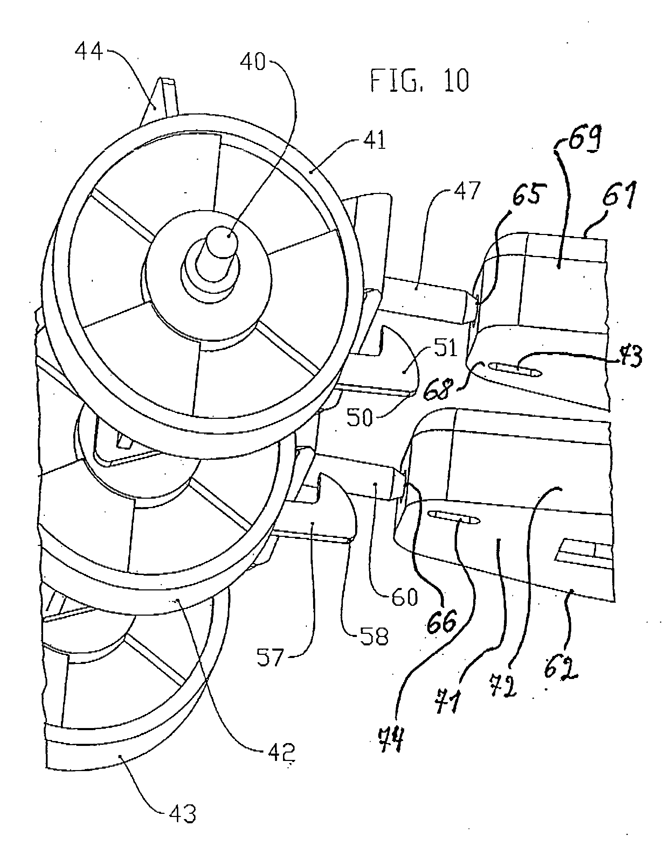

In der Fig. 6 ist der in Fig. 5 dargestellte und beschriebene Radsatz nochmals gezeigt, wobei in der Nähe des Radsatzes zwei Übergreifschienen 61 und 62 dargestellt sind. Die Übergreifschienen 61, 62 sind von vorne auf die Gabeln bzw. Tragbalken 26, 27 des Gabelhubwagens 1 aufgeschoben und verlängern diese in Richtung auf den in Fig. 6 dargestellten Radsatz zu. Sie stehen also über die in Fig. 4 mit dem Bezugszeichen 64 versehenen Enden der Tragbalken 26, 27 über. Wie sich aus den Figuren 6 bis 10 ergibt, sind die Übergreifschienen 61, 62 zumindest in ihrem dem Radsatz zugewandten Endbereich jeweils im Wesentlichen geschlossen mittels im Wesentlichen geschlossener Oberseitenfläche 67, 70, Unterseitenfläche 68, 71 und einer diese verbindenden Seitenrandfläche 69, 72 ausgebildet. Die Übergreifschienen 61, 62 sind somit quasi als Schuh auf die Tragbalken 26, 27 aufschiebbar. Die Mitten der Übergreifschienen 61 und 62 haben den gleichen Abstand voneinander wie die beiden Kupplungsbolzen 47 und 60. Die beiden Übergreifschienen 61 und 62 weisen vorn stirnseitig Kupplungsbohrungen 65, 66 zur Aufnahme der Kupplungsbolzen 47, 60 auf, wie dies insbesondere aus Fig. 10 ersichtlich ist.

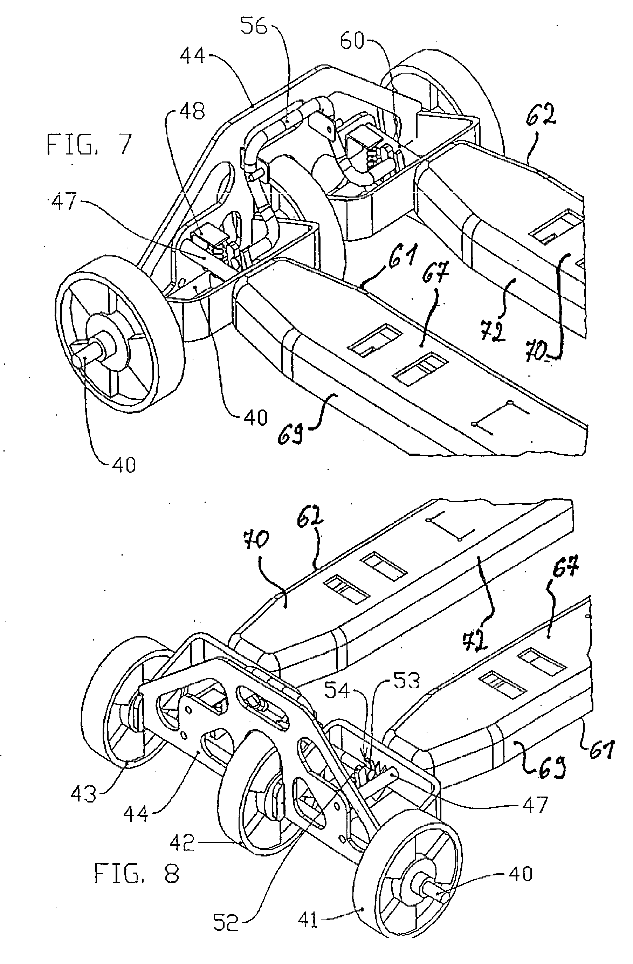

In Fig. 7 sind die beiden Übergreifschienen 61, 62 fest gegen die beiden Bügel 45, 59 gesetzt, so dass die Kupplungsbolzen 47, 60 in die Kupplungsbohrungen 65, 66 eingreifen und gleichzeitig die Klinken 50, 57 mit ihren Nasen 51, 58 jeweils in eine in den Unterseitenflächen 68, 71 der beiden Übergreifschienen 61, 62 ausgebildete Öffnungen 73, 74 eingreifen.

Der in Fig. 8 dargestellte Radsatz mit den beiden angekuppelten Übergreifschienen 61, 62 ist gegenüber der Darstellung gemäß Fig. 7 um etwa 90° gegen den Uhrzeigersinn geschwenkt.

In Fig. 9 ist der linke Teil der Fig. 5 vergrößert dargestellt. Es ist erkennbar, dass die Klinke 50 um eine Achse 75, die in einer an dem Bügel 45 befestigten Lasche 76 ausgebildet ist, gegen die Kraft der Feder 49 bewegt werden kann, wobei die Feder 49 die Klinke 50 bei fehlender Kraftbeaufschlagung von außen in die in Fig. 9 dargestellte Position bewegt. Analog ist die Klinke 57 an dem Bügel 59 befestigt und gelagert.

Ähnlich ist in Fig. 10 die Anordnung der Fig. 6 vergrößert und gedreht dargestellt. Hierdurch ist es möglich, die in den Übergreifschienen 61, 62 angeordnete Öffnungen 73, 74 zu erkennen, in die in der verriegelten Stellung die Klinken 50, 57 mit ihren Nasen 51, 58 einklinken bzw. einrasten. Die Klinken 50, 57 bilden zusammen mit den Kupplungsbolzen 47, 60 die Arretierungsmittel des Radsatzes aus.

Der Gabelhubwagen 1 besteht aus dem rückwärtigen Teil 10 und dem vorderen Teil 11, wobei das rückwärtige Teil 10 und das vordere Teil 11 lösbar miteinander verbunden sind. Das rückwärtige Teil 10 weist das Pumpengehäuse 17 auf, das als Zylinder ausgebildet ist und in dem die Kolbenstange 18 höhenverschieblich angeordnet ist. Das Pumpengehäuse 17 steht auf der Stütze 15, die auf der Achse 12 angeordnet ist, an deren beiden Enden je ein Lenkrad 13, 14 vorgesehen ist. Das Pumpengehäuse 17 ist auf der Konsole 16 gelagert, an der die Lenk- und Hubstange 20 in Längsrichtung des Gabelhubwagens 1 schwenkbeweglich angeordnet ist. An der Lenk- und Hubstange 20 ist ein durch die Rückstellfeder 22 belasteter Stift vorgesehen, der die Lenk- und Hubstange 20 in der senkrechten Stellung hält. An der Lenk- und Hubstange 20 ist ein Hebel vorgesehen, mit dem, wenn die Lenk- und Hubstange 20 in der Mittellängsebene des Gabelhubwagens 1 nach unten oder mehrere Male nach unten bewegt wird, Öl in das Pumpengehäuse 17 gefüllt wird, so dass die Kolbenstange 18 im Pumpengehäuse 17 sich senkrecht nach oben bewegt.

Der vordere Teil des Gabelhubwagens 1 weist zwei parallel zueinander ausgerichtete und horizontal verlaufende Tragbalken 26, 27 auf, die die Gabeln des Gabelhubwagens 1 ausbilden und an ihrem rückwärtigen Ende über einen Verbindungsbalken miteinander verbunden sind. Mit dem Verbindungsbalken und den beiden Tragbalken 26, 27 steht das Haltegestell 39 in Verbindung, das schräg nach oben gerichtet ist sowie oben eine sich nach unten öffnende Kalotte aufweist, mit der das Haltegestell 39 auf dem entsprechend kugelig geformten Kolbenstangenende aufliegt.

In der in der Fig. 2 gezeigten Stellung wird der Gabelhubwagen 1 unter eine Palette gefahren. Die von vorne auf die Tragbalken 26, 27 aufgeschobenen Übergreifschienen 61, 62 verlängern in dieser Stellung quasi die Tragbalken 26, 27 über ihre Tragbalkenenden 64 hinaus, so dass in unter einer Palette durchgefahrener Position die Enden 77 der Übergreifschienen 61, 62 aus der Palette hervorstehen.

Bei dem anschließenden Herausfahren der Kolbenstange 18 aus dem Pumpengehäuse 17 nach oben wird das Gabelträgergestell 63 mit den beiden Tragbalken 26, 27 nach oben angehoben, bis in etwa die in der Fig. 3 dargestellte Palettentransportposition - gegenüber der in Fig. 2 dargestellten Palettenunterfahrposition - erreicht ist . Zu diesem Zeitpunkt berühren aber noch die Laufrollen 38 den Fahrboden. In dieser Position kann dann der Radsatz an den Übergreifschienen angebracht werden. Die geschieht dadurch, dass die Kupplungsbolzen 47, 60 in die Kupplungsbohrung 65, 66 eingeführt und durchgeschoben werden, bis die Nasen 51, 58 der Klinken 50, 57 in die unterseitigen Öffnungen 73, 74 einrasten. Hierzu kann der Radsatz bequem an dem bügelförmig ausgebildeten Handgriff 56 ergriffen werden.

Zwischen dem rückwärtigen Teil 10 und dem vorderen Teil 11 des Gabelhubwagens 1 ist beidseitig je ein Kniehebel 30, 31 angeordnet, der mit je einer Fahrstange 36 innerhalb eines zugehörigen Tragbalkens 26, 27 verbunden ist. Die Fahrstange 36 ist so mit einer im vorderen Bereich des zugehörigen Tragbalkens 26, 27 angeordneten Laufrolle 38 verbunden, dass bei Anheben des Gabelträgergestells 63 mit den Tragbalken 26, 27 die Laufrolle 38 zunächst Bodenhaftung behält, bis sie ihre Endlage erreicht hat, und dann bei weiterem Anheben des Gabelträgergestells 63 die Bodenhaftung verliert, wie dies in Fig. 3 dargestellt ist. In dieser Stellung lässt sich der Gabelhubwagen 1 dann auf den gegenüber der Laufrolle 38 deutlich größere Durchmesser aufweisenden Lenkrollen 13, 14 und den Laufrädern 41 bis 43 des Radsatzes verfahren.

Die Übergreifschienen 61, 62 sind von vorne über die vorderen Bereiche der Tragbalken 26, 27 geschoben und auf den Tragbalken gegen unbeabsichtigtes Verschieben gesichert. Die Übergreifschienen können im Wesentlichen die Länge der Tragbalken 26, 27 aufweisen, sich aber auch lediglich über einen Teilbereich der Längserstreckung der Tragbalken, insbesondere deren halbe Länge, erstrecken. In den Figuren 2 und 3 erstrecken sich die Übergreifschienen 61, 62 über ca. Dreiviertel der Länge der Tragbalken 26, 27. Die Übergreifschienen können auf unterschiedlichste Art auf den Tragbalken 26, 27 gegen unbeabsichtigtes Herausziehen bzw. Abziehen gesichert werden. Denkbar ist beispielsweise ein Klappscharnier oder eine Klapplasche, die am dem Ende 77 gegenüberliegenden Ende an einer Seitenrandfläche 69, 72 der Übergreifschienen 61, 62 angeordnet und befestigt ist, und in seiner Verriegelungsstellung in ein in den Tragbalken 26, 27 ausgebildetes Lochmuster 78 eingreift.

Für besondere Zwecke können die Übergreifschienen 61, 62 in etwa die Länge der Tragbalken 26, 27 aufweisen und in ihrem rückwärtigen Bereich mit je einem L-förmigen Träger versehen sein. Dadurch können die Tragbalken - sofern sie vom Gabelträgergestell 63 lösbar sind - mit den vorderen Rädern des Radsatzes 2 als Sackkarre benutzt werden.

Die Übergreifschienen 61, 62 sind symmetrisch zur Mittefläche zwischen den Tragbalken 26, 27 angeordnet, von vorn über die vorderen Bereiche der Tragbalken 26, 27 geschoben und auf diesen gegen unbeabsichtigtes Verschieben gesichert.

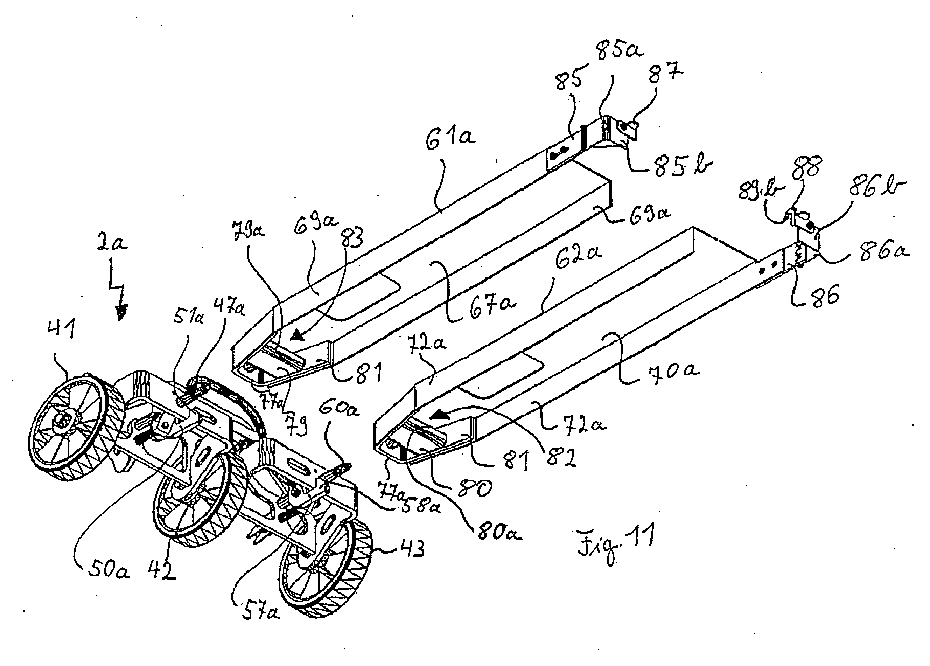

Ein alternatives Ausführungsbeispiel einer Gabelhubwagenausstattung ist aus der Fig. 11 ersichtlich. Die Fig. 11 zeigt zwei Übergreifschuhe oder schuhartige Übergreifschienen 61a, 62a mit zugehörigem Radsatz 2a in perspektivischer Sicht von schräg unten. Der Radsatz 2a ist im Wesentlichen identisch zum Radsatz 2 aufgebaut und weist neben drei Laufrädern 41, 42, 43 zwei Kupplungsbolzen 47a und 60a sowie zwei Klinken 50a und 57a mit jeweils einer Nase 51a und 58a auf. Die Übergreifschienen 61a, 62a sind auf ihrer Unterseite im Wesentlichen offen und weisen unterseitig an ihrem jeweiligen vorderen Ende einen Querbalken 79, 80 auf, der in einem der üblichen Höhe/Stärke der vorderen Enden/Endbereiche 64 von standardmäßigen Gabelhubwagen entsprechenden Abstand zur Unterseite der Oberseitenflächen 67a, 70a angeordnet und mittels Verstärkungsblechen 81 an den Seitenrandflächen 69a, 72a befestigt sind. In diesem Bereich 82, 83 werden die vorderen Endbereiche bzw. Tragbalkenenden 64 eingeführt bzw. greifen diese ein, wenn die Übergreifschiene 61a, 62a auf die Tragbalken 26, 27 aufgeschoben wird bzw. aufgeschoben worden ist. In dieser aufgeschobenen Position durchdringen dann bei an den Übergreifschienen 61a, 62a angebrachtem Radsatz 2a die Kupplungsbolzen 47a, 60a die Kupplungsbohrungen 55a, 66a und hintergreifen bzw. erfassen die Nasen 51a, 58a die Anschlagsflächen 79a, 80a der Querbalken 79, 80. Hierdurch ist der Radsatz 2a dann an den Übergreifschienen 61a, 62a sicher arretiert und befestigt.

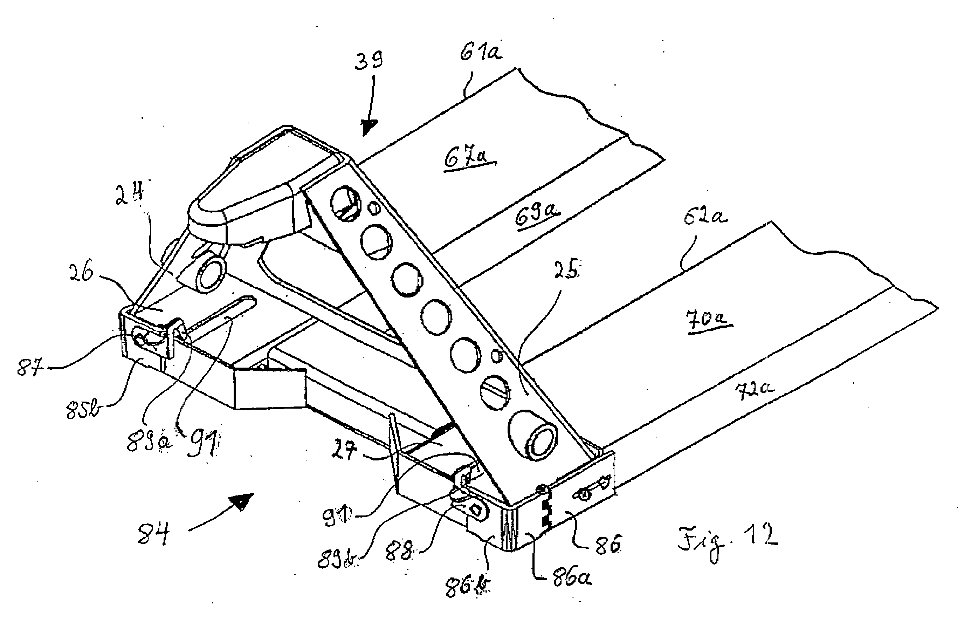

Die Übergreifschienen 61a, 62a ihrerseits weisen zur Befestigung im Bereich 84 (Figuren 1 und 12) hinter dem Haltegestell 39 in Höhe der Tragbalken 26, 27 jeweils ein Befestigungsscharnier 85, 86 mit einem Schwenkhebel 87, 88 auf, das jeweils an der gabelhubwagenaußenseitigen Seitenrandfläche 69a, 70a an der dem vorderen Ende 77a abgewandten Seite angeordnet ist. In der aus der Fig. 12 ersichtlichen, auf die Tragbalken 26, 27 aufgeschobenen Position reichen die Oberseitenflächen 67a und 70a bis an die Vorderseite der Schrägbalken 24, 25 des Haltegestells 39 heran. Die Schwenkteile 85a, 86a lassen sich dann im Bereich 84 hinter die hinteren Enden der Tragbalken 26, 27 verschwenken, so dass die Scharnierteile 85b und 86b in Anlage mit den Tragbalkenenden im Bereich 84 gelangen. Zur weiteren Befestigung werden dann die Schwenkhebel 87, 88 von oben in die in den Figuren 11 und 12 dargestellte Position verschwenkt und greifen dann jeweils mit Nasen 89a, 89b von oben in Öffnungen 90, 91 des Gestells 39 unterhalb der Schrägbalken 24, 25 ein. Damit sind die Übergreifschienen 61a, 62a dann verrutschsicher auf den Tragbalken 26, 27 an dem Gabelhubwagen 1 befestigt. Die Übergreifschienen 61a, 62a weisen bei diesem Ausführungsbeispiel in etwa die Länge der Tragbalken 26, 27 auf.

### Bezugszeichenliste

- 1: Gabelhubwagen
- 2, 2a: Radsatz
- 10: rückwärtiger Teil
- 11: vorderer Teil
- 12: Achse
- 13, 14: Lenkräder
- 15: Stütze
- 16: Konsole
- 17: Pumpengehäuse
- 18: Kolbenstange
- 19: Schwenkgelenk
- 20: Lenk- und Hubstange
- 21: Griff
- 22: Rückstellfeder
- 23: oberer Teil
- 24, 25: Schrägbalken
- 26, 27: Tragbalken
- 28, 29: Gelenk
- 30, 31: Kniehebel
- 32: Hebelstange
- 33: Gelenk
- 34: Hebelarm
- 35: Gelenk
- 36: Fahrstange
- 37: Hebelarm
- 38: Laufrolle
- 39: Haltegestell
- 40: Achse
- 41: Laufrad
- 42: Laufrad
- 43: Laufrad
- 44: Halteplatte
- 45: Bügel

- 46: Bohrung
- 47, 47a: Kupplungsbolzen
- 48: Winkelblech
- 49: Feder
- 50, 50a: Klinke
- 51, 51a: Nase
- 52: Gabelende
- 53: Gabelende
- 54: Schlitz
- 55: Entriegelungsbügel
- 56: Handgriff
- 57, 57a: Klinke
- 58, 58a: Nase
- 59: Bügel
- 60, 60a: Kupplungsbolzen
- 61, 61a: Übergreifschiene
- 62, 62a: Übergreifschiene
- 63: Gabelträgergestell
- 64: Tragbalkenende
- 65, 65a,:
- 66, 66a: Kupplungsbohrung
- 67, 67a,:
- 70, 70a: Oberseitenfläche
- 68, 71: Unterseitenfläche
- 69, 69a,:
- 72, 72a: Seitenrandfläche
- 73, 74: Öffnung
- 75: Achse
- 76: Lasche
- 77: Ende der Überqreifschienen
- 78: Lochmuster
- 79, 80: Querbalken
- 79a, 80a: Anschlagsflächen
- 81: Verstärkungsblech
- 82, 83: Bereich
- 84: Bereich
- 85, 86.: Befestigungsscharnier
- 85a, 86a: Schwenkteil
- 85b, 86b: Scharnierteil
- 87, 88: Schwenkhebel
- 89a, 89b: Nase
- 90, 91: Öffnungen

## Patentansprüche

1. Radsatz (2, 2a) eines Gabel- oder Tragbalken (26, 27) aufweisenden Gabelhubwagens (1) oder einer Gabelhubwagenausstattung, der lösbar an dem Gabelhubwagen (1) oder der Gabelhubwagenausstattung anbringbar ist und eine Achse (40) mit drehbeweglich daran angeordneten Laufrädern (41, 42, 43) sowie Arretierungsmittel (47, 60; 51, 58; 47a, 60a; 51a, 58a) aufweist
**dadurch gekennzeichnet,**
**dass** die Arretierungsmittel (47, 60; 51, 58; 47a, 60a; 51a, 58a) einen ersten Kupplungsbolzen (47,47a) und einen zweiten Kupplungsbolzen (60,60a) mit jeweils einer zugeordneten und damit zusammenwirkenden Klinke (50, 50a, 57, 57a) mit Nase (51, 51a, 58, 58a) umfassen, wobei der ersten Kupplungsbolzen (47, 47a) und der zweiten Kupplungsbolzen (60, 60a) einen dem Abstand der Mittelachsen der Gabeln oder Tragbalken (26, 27) eines Gabelhubwagens (1) entsprechenden Abstand aufweisen.

2. Radsatz nach Anspruch 1, **dadurch gekennzeichnet, dass** an einer Halteplatte (44) ein rückwärtiger Teil der Klinken (50, 57; 50a, 57a) federbelastet gelagert ist.

3. Radsatz nach Anspruch 1 oder 2, **dadurch gekennzeichnet, dass** die Klinken (50, 50a, 57, 57a) Gabelenden (52, 53) mit einem dazwischenliegenden Schlitz (54) aufweisen, in dem ein Entriegelungsbügel (55) gelagert ist.

4. Radsatz nach einem der vorhergehenden Ansprüche, **dadurch gekennzeichnet, dass** auf der Achse (40) ein zu der Achse (40) parallel verlaufendes und auf der Achse (40) drehbar angeordnetes Gestell angeordnet ist, welches die Halteplatte (44) und zwei in Längsrichtung der Achse (40) voneinander distanzierte Bügel (45, 59) mit Abstand von der Halteplatte (44) aufweist, wobei erster und zweiter Kupplungsbolzen (47, 47a, 60, 60a) an der Halteplatte (44) festgelegt sind und durch jeden Bügel (45, 59) ein Kupplungsbolzen (47, 47a, 60, 60a) hindurchtritt.

5. Radsatz nach einem der vorhergehenden Ansprüche, **dadurch gekennzeichnet, dass** an der Halteplatte (44) Winkelbleche (48) befestigt sind, an denen jeweils über eine Feder (49) die Klinken (50, 50a, 57, 57a) federbelastet gelagert sind.

6. Radsatz nach einem der vorhergehenden Ansprüche, **dadurch gekennzeichnet, dass** an den Bügeln (45, 59) Laschen (76) befestigt sind, an welchen die Klinken (50, 50a, 57, 57a) um eine Achse (75) bewegbar angeordnet sind.

7. Radsatz nach einem der vorhergehenden Ansprüche, **dadurch gekennzeichnet, dass** an der Halteplatte (44) ein Handgriff (56) ausgebildet ist.

8. Radsatz nach einem der vorhergehenden Ansprüche, **dadurch gekennzeichnet, dass** auf der Achse (40) des Radsatzes (2, 2a) drei Laufräder (41, 42, 43) angeordnet sind.

9. Radsatz nach einem der vorhergehenden Ansprüche, **dadurch gekennzeichnet, dass** der Radsatz (2, 2a) auf der Achse (40) drehbeweglich angeordnete Laufräder (41, 42, 43) mit einem dem Durchmesser von Lenkrädern (13, 14) eines Gabelhubwagens (1) entsprechenden Durchmesser aufweist.
